# FASCICULE DE BREVET EUROPEEN

(11) **EP 0 796 807 B1**
(45) Date de publication et mention de la délivrance du brevet: **05.09.2001**
(21) Numéro de dépôt: 97400582.9
(22) Date de dépôt: 14.03.1997
(51) Int. Cl.: B65G 43/00

(54) **Procédé et dispositif de réglage de la vitesse d'avancement d'un convoyeur entraîné par un monteur hydraulique, appliqué à une machine du genre désileuse-distributrice, épandeuse ou autre**
Verfahren und Vorrichtung zum Regulieren der Vorschubgeschwindigkeit eines von einem Hydromotor angetriebenen Förderers,angewendet in einer Maschine wie Silageverteiler, Streuer oder dgl
Method and device for regulating the advancement speed of a conveyor driven by a hydraulic motor, and fitted to a machine such as a Silage distributor, spreader or the like

(30) Priorité: 20.03.1996 FR 9603655
(43) Date de publication de la demande: 24.09.1997
(73) Titulaire: LUCAS G. S.A., F-85130 La Verrie (FR)
(72) Inventeur: Lucas, Gérard, 85130 La Verrie (FR); Retaillaud, Jean-Claude, 85130 La Verrie (FR); Godreau, Christophe, 85110 Chantonnay (FR)
(74) Mandataire: Michelet, Alain

(56) Documents cités:
- EP-A- 0 107 959
- EP-A- 0 365 341
- EP-A- 0 524 032
- DE-A- 4 201 300
- FR-A- 2 197 796
- US-A- 4 454 713

## Description

La présente invention concerne un procédé et un dispositif de réglage de la vitesse d'avancement d'un convoyeur ou autre, entraîné par un moteur hydraulique, lequel dispositif est utilisé notamment sur des machines du genre désileuses-distributrices, épandeuses ou autres, où le convoyeur, du type convoyeur à barrettes, fait progresser les produits vers des dispositifs de déchiquetage et/ou de distribution.

En général, comme décrit dans le document FR-A-2 197 796, la vitesse d'avancement du tapis est ajustée par réglage de la vitesse de rotation du moteur hydraulique d'entraînement. L'alimentation de ce moteur hydraulique, à partir d'une centrale appropriée, est réglée au moyen d'un régulateur ou diviseur de débit, c'est-à-dire un dispositif classique qui offre une grande précision. Mais ce type de composant est relativement onéreux surtout lorsqu'il est piloté à distance par le biais d'un moteur électrique par exemple, commandé par l'opérateur depuis sa cabine.

La présente invention propose un procédé de réglage de la vitesse d'avancement du convoyeur précité, qui permet de réduire de façon notable le coût de cet équipement sans nuire à l'efficacité ni à la facilité de réglage de cette vitesse pour l'utilisateur.

Le procédé selon l'invention consiste à interposer une électrovanne du type tout ou rien, entre la centrale hydraulique d'alimentation et le moteur hydraulique et, d'une part, à faire battre cette électrovanne selon un rythme ou période pré-établie, et, d'autre part, dans cette période, à moduler ou faire varier le temps d'ouverture de l'électrovanne.

Ce procédé consiste en fait à faire fonctionner le moteur hydraulique pas à pas, au moyen d'une alimentation hachée. Ce procédé s'apparente à celui qui découle d'un système d'entraînement par roue à cliquet.

Toujours selon l'invention, la période battement est réglable, choisie entre 0,5 seconde et 2 secondes par exemple, en fonction du matériel.

Le dispositif de réglage pour la mise en oeuvre du procédé comprend un séquenceur qui pilote l'électrovanne selon une période pré-établie, lequel séquenceur est associé à un pupitre de commande sur lequel on trouve un commutateur marche-arrêt, une manette ou une paire de boutons qui permettent de régler à volonté le ratio entre le temps d'ouverture de l'électrovanne et le temps d'arrêt, dans ladite période pré-établie.

Toujours selon l'invention, le pupitre de commande comporte également des moyens d'affichage de la vitesse de rotation du moteur hydraulique ou de la vitesse d'avancement du convoyeur ou encore un affichage de valeurs repères.

L'invention sera encore détaillée à l'aide de la description suivante et des dessins annexés selon les quels :
- la figure 1 représente schématiquement le moteur hydraulique et ses organes de commande ;
- la figure 2 représente, sous forme de graphique, le fonctionnement de l'électrovanne.

Le moteur hydraulique 1 qui sert à l'entraînement d'un convoyeur non représenté, est alimenté au moyen d'une centrale hydraulique classique 2. L'alimentation s'effectue à travers une électrovanne 3 du type tout ou rien dont la position normale est une position fermée. Cette électrovanne 3 permet d'alimenter le moteur hydraulique 1, lorsqu'elle est excitée c'est-à-dire mise sous tension.

La commande de cette électrovanne s'effectue au moyen d'un séquenceur 4 électrique ou électronique qui est associé ou intégré par exemple dans un boîtier 5. Ce boîtier comporte un tableau d'affichage 6 sur lequel l'opérateur peut lire la vitesse de rotation du moteur hydraulique 1 ou encore la vitesse d'avancement du convoyeur ou bien des repères qui sont en corrélation avec ces vitesses.

Le boîtier 5 comporte également un bouton 7 du type marche-arrêt et une manette ou comme représenté, un bouton 8 qui par exemple permet d'accélérer la vitesse c'est-à-dire d'augmenter le temps d'ouverture de l'électrovanne et un bouton 9 qui permet au contraire de réduire le temps d'ouverture de l'électrovanne ce qui permet de réduire la vitesse de rotation du moteur hydraulique.

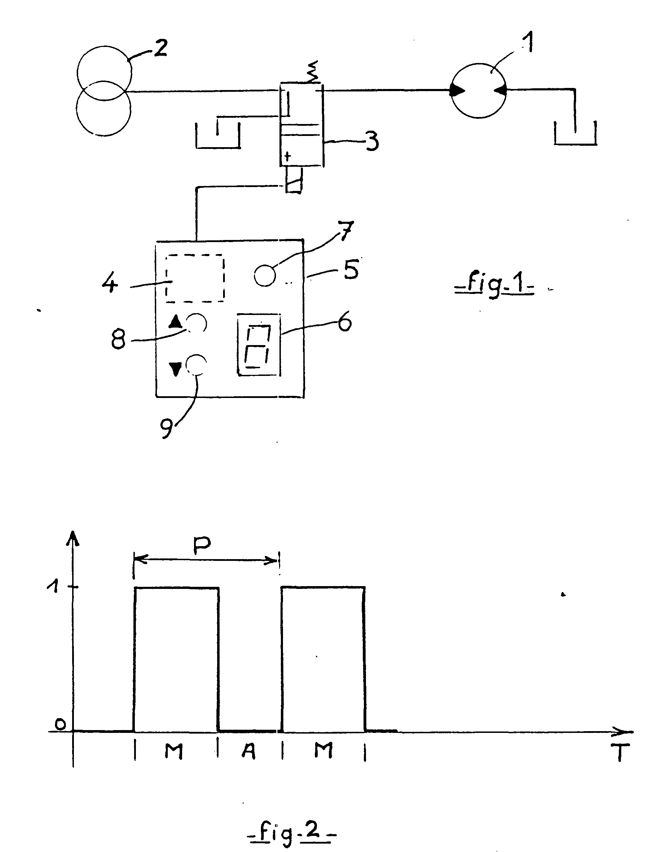

La figure 2 représente la courbe d'alimentation de l'électrovanne 3. En ordonnée, on trouve soit la fermeture de l'électrovanne (0) soit l'ouverture (1). En abscisse, sur l'échelle de temps, on trouve la période P de battement de l'électrovanne et, dans cette période, le temps d'ouverture M de l'électrovanne et le temps A qui correspond à l'arrêt de l'électrovanne.

Le ratio temps d'ouverture M/temps de fermeture A de l'électrovanne est réglable au moyen des boutons 8 et 9 qui agissent sur le séquenceur, de façon à modifier la quantité d'huile qui alimente le moteur hydraulique 1.

La période P est choisie d'une manière générale en fonction du matériel entre 0,5 et 2 secondes par exemple. Ainsi, elle peut dépendre du débit de la centrale hydraulique d'alimentation, de la vitesse de réaction de l'électrovanne. ...

## Revendications

1. Procédé de réglage de la vitesse d'avancement d'un convoyeur ou autre, entraîné par un moteur hydraulique (1) qui est alimenté au moyen d'une centrale hydraulique (2), **caractérisé en ce qu**'il consiste à interposer une électrovanne (3) du type tout ou rien entre ladite centrale et ledit moteur, à faire battre ladite électrovanne selon un rythme ou période pré-établie et à moduler dans cette période, le temps d'ouverture de l'électrovanne.

2. Procédé selon la revendication 1, **caractérisé en ce qu**'il consiste à établir une période de battement choisie entre 0,5 et 2 secondes par exemple.

3. Dispositif pour la mise en oeuvre du procédé selon l'une quelconque des revendications 1 ou 2, utilisé dans une machine du type désileuse-distributrice, épandeur, comprenant un convoyeur du type à barrettes par exemple, entraîné par un moteur hydraulique (1) qui est alimenté au moyen d'une centrale (2), **caractérisé en ce qu**'il comprend une électrovanne (3) commandée par un séquenceur (4), lequel séquenceur est associé à un boîtier de commande (5) sur lequel on trouve notamment une manette ou une paire de boutons (8, 9) qui permettent de régler le ratio entre le temps d'ouverture et le temps de fermeture de ladite électrovanne dans la période établie par ledit séquenceur.

4. Dispositif selon la revendication 3, **caractérisé en ce qu**'il comporte un afficheur de la vitesse du moteur hydraulique (1) ou de valeurs qui permettent de repérer cette vitesse.

## Patentansprüche

1. Verfahren zum Regeln der Vorwärtsgeschwindigkeit eines Förderers oder dergleichen, der von einem hydraulischen Motor (1) angetrieben wird, der von einer hydraulischen Zentrale (2) versorgt wird, **dadurch gekennzeichnet**, dass das Verfahren das Anordnen eines Elektroventils (3) des Ein-/Austyps zwischen der Zentrale und dem Motor, das Veranlassen des Schlagens (Schaltens) des Elektroventils gemäß einem voreingestellten Rhythmus oder einer voreingestellten Periode und das Verändern der Öffnungszeit des Elektroventils innerhalb dieser Periode umfasst.

2. Verfahren nach Anspruch 1 **dadurch gekennzeichnet**, dass es das Einrichten einer zwischen beispielsweise 0,5 und 2 Sekunden gewählten Schlagperiode umfasst.

3. Vorrichtung zur Durchführung des Verfahrens nach einem der Ansprüche 1 oder 2 unter Verwendung einer Maschine des Typs Silageverteiler, Streuer, umfassend einen Förderer beispielsweise des Stegtyps, der durch einen hydraulischen Motor (1) angetrieben wird, der von einer hydraulischen Zentrale (2) versorgt wird, **dadurch gekennzeichnet**, dass die Vorrichtung ein Elektroventil (3) aufweist, dass von einem Folgeschalter (4) gesteuert wird, welcher Folgeschalter mit einem Steuergehäuse (5) verschaltet ist, an dem sich insbesondere ein Bedienungshebel oder ein Knopfpaar (8, 9) befindet, der bzw. das das Einstellen des Verhältnisses zwischen der Öffnungszeit und der Schließzeit des Elektroventils innerhalb der durch den Folgeschalter eingestellten Periode erlaubt.

4. Vorrichtung nach Anspruch 3, **dadurch gekennzeichnet**, dass sie ein Anzeigegerät für die Geschwindigkeit des hydraulischen Motors (1) oder für Werte, die das Feststellen dieser Geschwindigkeit erlauben, aufweist.

## Claims

1. A method for regulating the advancement speed of a conveyor or the like, driven by a hydraulic motor (1) that is power supplied by a hydraulic plant (2), **characterised in that** it consists in interposing a solenoid valve (3) of the 'all or nothing' type between the said plant and the said motor, in making the said solenoid valve beat according to a pre-set rythm or period and in modulating within this period, the aperture time of the solenoid valve.

2. A method according to claim 1, **characterised in that** it consists in establishing a beat period ranging from 0.5 and 2 seconds, for example.

3. A device for implementing the method according to any of the claims 1 or 2, fitted to a machine such as a silage distributor or spreader, comprising a crossbar conveyor for instance, driven by a hydraulic motor (1) that is supplied by a power plant (2), **characterised in that** it contains a solenoid valve (3) controlled by a sequencer (4), which sequencer is associated with a control box (5) on which a joystick or a pair of buttons (8, 9) can be found, which enable adjustment of the ratio between the aperture time and the closing time of the said solenoid valve in the period pre-set by the said sequencer.

4. A device according to claim 3, **characterised in that** it comprises a speed display of the hydraulic motor (1) or of values that enables perception of this speed.
